# EUROPEAN PATENT SPECIFICATION

(11) **EP 1 197 658 B1**
(45) Date of publication and mention of the grant of the patent: **27.09.2006**
(21) Application number: 01915441.8
(22) Date of filing: 29.03.2001
(51) Int. Cl.: F03B 13/18

(54) **PUMPING SYSTEM ACTUATED BY MARINE WAVES**
PUMPSYSTEM GETRIEBEN VON MEERESWELLEN
SYSTEME DE POMPAGE ACTIONNABLE PAR LA HOULE

(30) Priority: 29.03.2000 ES 200000771
(43) Date of publication of application: 17.04.2002
(73) Proprietor: Bonet Subirana, Pere, 08500 Vic (ES); Bonet Almeda, Pedro, 08500 Vic (ES)
(72) Inventor: Bonet Subirana, Pere, 08500 Vic (ES); Bonet Almeda, Pedro, 08500 Vic (ES)
(74) Representative: Toro Gordillo, Ignacio Maria
(86) International application number: PCT/ES2001/000125
(87) International publication number: WO 2001/073290

(56) References cited:
- WO-A1-92/14926
- ES-A1- 2 107 384
- GB-A- 1 478 312
- GB-A- 2 210 667
- US-A- 1 754 025
- US-A- 4 281 257
- US-A- 4 560 884

## Description

### OBJECT OF THE INVENTION

As its title indicates, the present invention refers to a pumping system actuated by ocean waves and which permits a high pressure water flow that may be used to obtain mechanical or electric energy or to desalinise sea water by reverse osmosis membranes.

### BACKGROUND OF THE INVENTION

A current concern involves obtaining and using non-contaminating energies by using equipment with a reasonable cost and providing yields similar to those from equipment using fossil fuels.

In fact, the equipment most commonly used includes power units activated by eolic energy and solar panels used both to heat water and generate electric energy.

Another possible energy source object of different studies, is wave movement since it offers great possibilities, especially in those areas where it is almost continuous.

However, the harnessing of wave energy is very complex since the location in the sea of devices capable of obtaining energy from wave movement involves the construction of static platforms and the laying of submerged lines to transport the energy to dry land. The location of these systems on the coast is also complex, since the differences of altitude due to tides should be compensated.

Some patents as W09214926 and US4560884 foresee the exploitation of the ocean waves through a system of floats with first kind levers, but their output is quite low as the pressure obtained is not high, they do not neither foresee the fixed structure parallel to the disposal of the tides, but the exploitation of said tides through the prediction of the floats trajectory.

### DESCRIPTION OF THE INVENTION

The pumping system actuated by ocean waves, object of this invention, permits a high pressure water flow to be obtained and has been designed to be located on dry land and very close to the sea.

According to the invention, this pumping system is built by the features of claim 1.

Both the foldable and auxiliary arms are fixed by one of their ends to the fixed structure by means of two spin axes, said arms being folded towards the upper area due to the action of the waves over the floats fitted over the free end thereof, and towards the lower area due to the own weight of the arms when permitted by the float supported by the water.

The floats are fitted over the foldable and auxiliary arms by means of a structure fixed to the latter by means of the corresponding spin axes, assuring the parallelism of said arms and the vertical displacement of the float due to the wave effect.

According to the invention, the intermediate components entrusted with transmitting the movement of the foldable arms to the foldable structures, consist of some rods articulated over the middle area of the foldable arms and over the front end of said foldable structures.

These foldable structures, that may be one or several arranged in a parallel manner, are fitted by their rear end and by means of the corresponding spin axes, over the fixed structure, remaining located above the latter and their rear end emerging with respect to said fixed structure in a seawards direction.

The levers and the corresponding foldable structures are linked through their middle areas by means of spin axes. The latter permit variation of lever gradient with respect to the foldable structures during operation of the pumping system to absorb the differences of float level due to the influence of the tides.

To assure the rectilinear displacement of the pistons belonging to the pumping cylinders, it has been foreseen that the cylinders be fixed by their lower end to the fixed structure and that the pistons thereof are fixed to a cross beam interlocked to some trolleys arranged parallel to said cylinders and installed with the possibility of longitudinal displacement over some guides defined for such a purpose in the mobile structure.

The rods entrusted with transmitting the movement of the foldable structures to the pumping cylinders are fixed by their ends, by means of the corresponding spin axes, to the front end of the aforementioned levers and to the cross beam fixed over the trolleys and supporting the piston heads.

The compensating devices of the height variations of the folding structures due to the effect of the tides include some telescopic arms conforming a support point of the levers, some hydraulic cylinders to vary the gradient of the telescopic arms and the support point of the levers over themselves and a hydraulic circuit acting over the telescopic arms and over the mentioned hydraulic cylinders, adjusting their position according to the pumping cylinder piston run.

The telescopic arms, conforming the support point of the levers, are fixed by one of their ends to the fixed structure by means of a spin axis and are arranged on the opposite end of a slide fitted with the possibility of longitudinal displacement over the rear part of the corresponding lever.

These slides are fitted over the rear end of the telescopic arms and may be displaced along the rear area of the levers by the action of the mentioned hydraulic levers, such that on approaching or moving away the slides from the point of rotation of the levers, it is possible to vary their relative gradient with respect to the foldable structures.

The displacement of the slides and the length variation of the related telescopic arms is automatically controlled by means of a hydraulic circuit provided with an oil deposit, a hydraulic distribution box, some slide control pumps, emergency pumps and flow adjustment pumps.

The run adjustment pumps are fitted to the fixed structure in some areas slightly distanced from the maximum end points of the trolley runs, such that when the piston run is off-centred towards the upper or lower zone due to change of the relative position of the mobile structures due to the effect of the tide, the trolleys act over the run control pumps arranged in the upper or lower area, the hydraulic circuit acting over the telescopic arms or cylinders entrusted with displacing the slides over the rear section of the levers, varying the relative gradient of the latter with respect to the mobile structures until achieving centring of the piston run corresponding to the pumping cylinders.

The aforementioned emergency pumps are fitted to the fixed structure in zones near to the maximum end points of the trolley run, one of said emergency pumps being activated when the run of the pistons corresponding to the pumping cylinders has excessive decentring towards one of its ends, that may be produced, for example, by a very high wave. In this case, the activation of one of the emergency pumps provokes an action over the telescopic arms and over the hydraulic cylinders entrusted with the displacement of the slides to quickly modify lever gradient, varying its reactive gradient with respect to the mobile structure to centre the piston run.

### DESCRIPTION OF THE DRAWINGS

To complete the description being made and to facilitate the understanding of the features of the invention, a set of drawings is attached to this specification in which, with an illustrative and non-limiting character, the following has been shown:

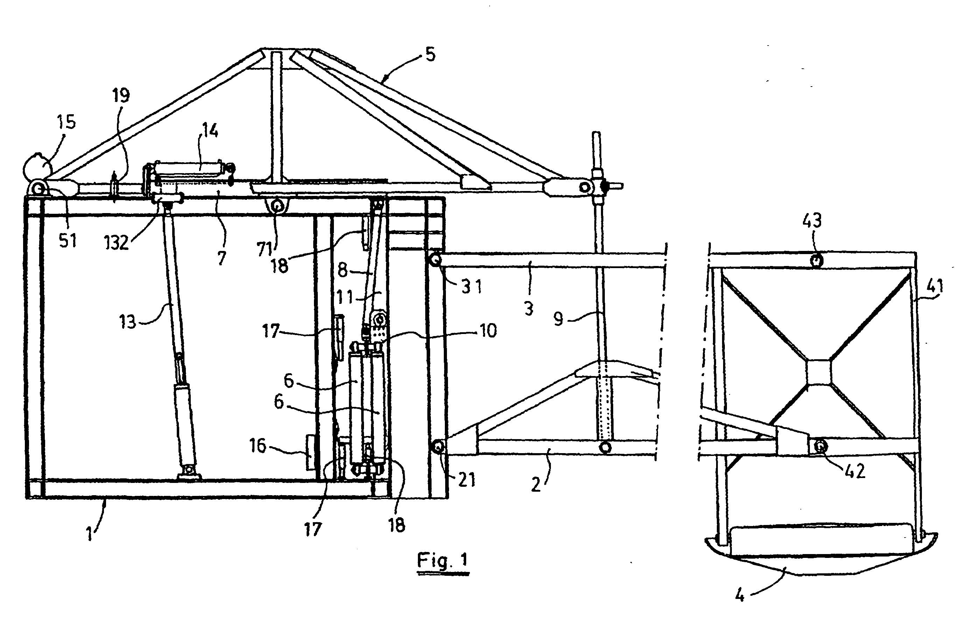

- Figure 1 shows a profile view of an example of embodiment of the pumping system object of the invention, in which one of the pump groups may be observed, since in the case of said system having several pump groups, these would be arranged parallel to that shown and therefore, hidden by it. In this figure, an intermediate part of the foldable and auxiliary arms has been eliminated, due to the elevated length thereof with respect to the remaining system components.

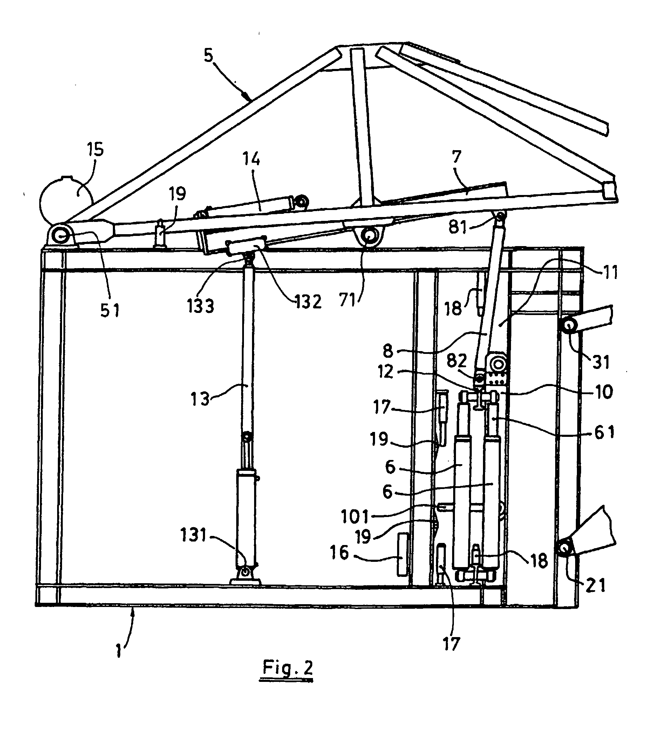

- Figure 2 shows a partial profile view of the pumping system shown in the previous figure and in an intermediate pumping position.

### PREFERRED EMBODIMENT OF THE INVENTION

As may be seen in the mentioned figures, this pumping system is provided with a fixed structure (1) over which a foldable arm (2) and an auxiliary arm (3) are assembled by means of the corresponding spin axes (21 and 31). The foldable arm (2) and the auxiliary arm (3) may have a length of 20 or 30 meters, overhanging the sea and resting over it by means of a float (4) joined to them by means of a structure (41) fixed to them by means of the axes (42 and 43).

Over the fixed structure (1), a foldable structure (5) is assembled whose rear end is joined to the former by means of the spin axis (51).

The foldable structure (5) is entrusted with receiving from the foldable arm (2) the lifting and lowering movements produced by the action of the waves over the float (4), transmitting said movement to the pistons (61) of the pumping cylinders (6) by means of the lever (7) and the rod (8).

The movement produced by the action of the waves over the float (4) is transmitted from the foldable arm (2) to the foldable structure (5) by means of the rod (9).

The rod (8) is fixed at its upper end to the front end of the lever (7) by means of the axis (81) and by its lower end to a cross beam (12) by means of the spin axis (82).

The cross beam (12) is interlocked to a trolley (10) parallel to the pumping cylinders (6) and is installed with the possibility of longitudinal displacement over some guides (11) defined in the structure (1). The purpose of this trolley (10) is to achieve the rectilinear movement of the pistons (61), fixed to the mentioned cross beam (12), during operation of the system.

For the lever (7) to transmit the movement of the foldable structure (5) to the rod (8), and hence to the pistons (61), it is necessary that it has a rear support point, the latter consisting of a telescopic arm (13) whose lower end is fixed to the structure (1) by means of a spin axis (131) and which has on its upper end a slide (132) fixed to the same by a spin axis (133). The slide (132) may be longitudinally displaced over the rear area of the lever (7), approaching or distancing it to the spin axis (71) of said lever by action of a hydraulic cylinder (14).

By varying the length of the telescopic arm (13) and the slide position (132) by means of the action of the hydraulic cylinder (14) the relative gradient of the lever (7) may be varied with respect to the foldable structure (5) so that the run of the pistons (61) is kept centred while the general gradient of the foldable structure (5) is varied due to the effect of the tide.

To carry out this operation automatically during operation of the pumping system, the latter incorporates a hydraulic circuit consisting of an oil deposit (15), a distribution box (16), some run adjusting pumps (17), some emergency pumps (18) and some flow rate adjustment pumps (19).

In the normal working position, the pistons (61) of the pumping cylinders (6) will describe a centred run of less length to the existing one between the run adjustment pumps (17). If said run is uncentred towards the upper or lower areas due to a variation of the reference position of the foldable structure (5) due to the effect of the tide, one of said run adjustment pumps (17) will be successfully activated by an arm (101) interlocked to the trolley (10) activating the hydraulic circuit over the telescopic arm (13) and over the hydraulic cylinder (14) to vary the lever (7) gradient until regaining the centring of piston runs (61).

If said run is uncentred to a greater extent, the trolley (10) will act over the emergency pump (18) corresponding to the upper or lower end, also activating the telescopic arm (13) and the hydraulic cylinder (14) to quickly vary the gradient of the lever (7) and arrange it in a position providing the centring of the run of both pistons (61).

Having sufficiently described the invention as well as a preferred embodiment, it is stated for the relevant purposes, that the materials, shape, size and arrangement of the components described may be modified within the scope of the appended claims.

## Claims

1. A pumping system actuated by ocean waves of the type comprising a fixed structure (1) placed on solid ground, a foldable arm (2) and an auxiliary arm (3), both joined by one of its end to the fixed structure, whereby the arms swing over this fixed structure (1) through the action exercised by the waves to a float (4) joined to the arms (23) opposite to the fixed structure (1), **characterised in that** a vertical tiltable movement is obtained, as the foldable arm (2) which supports the float is longer than the auxiliary arm (3), a greater force is achieved, which is transmitted to the fixed structure (1)through a foldable structure (5), which compensates through a system of levers (7), the differences in height of said foldable structure (5) by the tide effect; this foldable structure (5) has movement means (132, 133) and is connected to rods (8) which activates the pumping cylinders (6), some telescopic arms (13) conforming a support point of the levers (7), hydraulic cylinders (14) to change the gradient of the telescopic arms (13) and the support point of the levers (7) over them, and a hydraulic circuit acting over the telescopic arms (13) and the hydraulic cylinders (14) adjusting their position according to the run in the pistons (61) of the pumping cylinders (6).

2. A pumping system according to claim 1, **characterised in that** the foldable arms (2) and the auxiliary arms (3) are fixed at one of their ends to the fixed structure (1) by means of two spin axes (21 and 31) overspanning the sea.

3. A pumping system according to the previous claims, **characterised in that** the floats (4) are fitted over the lower end of a fixed structure (41), with possibility of rotation and by means of the corresponding spin axes (42 and 43) to the foldable arms (2) and to the auxiliary arms (3), said arms assuring the vertical displacement of the float (4) due to the effect of the waves.

4. A pumping system according to previous claims, **characterised in that** the intermediate components for the transmission of the movement of the foldable arms (2) to the foldable structures (5) consist of some rods (9) articulated over the middle area of the foldable arms (2) and over the front end of said flexible structures (5).

5. A pumping system according to the previous claims, **characterised in that** the foldable structures (5) are assembled at their rear end and by means of the corresponding spin axes (51) over the fixed structure (1).

6. A pumping system according to the previous claims, **characterised in that** the foldable structures (5) are located above the fixed structure (1), its front end protruding with respect to said fixed structure (1) seawards.

7. A pumping system according to previous claims, **characterised in that** the levers (7) and the foldable structures (5) are joined along their central areas by means of spin axes (71).

8. A pumping system according to previous claims, **characterised in that** the devices to assure the rectilinear displacement of the pistons (61) of the pumping cylinders (6) consist of some trolleys (10) arranged parallel to said cylinders (6) and fitted with the possibility of longitudinal displacement over some guides (11) defined for such a purpose in the mobile structure (1).

9. A pumping system according to previous claims, **characterised in that** the pistons (61) are joined to a crossbeam (12) interlocked to the trolleys (10).

10. A pumping system according to previous claims, **characterised in that** the rods (8) transmitting the movement of the foldable structures (5) to the cylinders (6) are fixed at their ends by means of the corresponding spin axes (81 and 82), to the rear end of the levers (7) and the crossbeam (12).

11. A pumping system according to previous claims, **characterised in that** the telescopic arms (13) are fixed at one of their ends to the fixed structure(1) by means of a spin axis (131), having at the opposite end a slide (132) fitted with the possibility of longitudinal movement over the rear part of the corresponding lever (7).

12. A pumping system according to previous claims, **characterised in that** the slides (132) are fitted over the rear end of the telescopic arms (13) by means of a spin axis (133).

13. A pumping system according to previous claims, **characterised in that** displacement of the slides (132) over the levers (7) is determined by the action of the cylinders (14) over them.

14. A pumping system according to previous claims, **characterised in that** the hydraulic circuit includes an oil deposit (15), a hydraulic distribution box (16), some run adjustment pumps (17), some emergency pumps (18) and some flow adjustment pumps(19).

15. A pumping system according to previous claims, **characterised in that** the run adjustment pumps (17) are fastened to the fixed structure (1) and in areas slightly distanced from the end points of the maximum run of the trolleys (10).

16. A pumping system according to previous claims, **characterised in that** the emergency pumps (18) are fastened to the fixed structure, in areas near to the end points of the maximum run of the trolleys (10).

## Patentansprüche

1. Vom Wellengang angetriebenes Pumpensystem, der Art, die eine auf dem Festland aufgestellte feste Struktur (1), einen Klapparm (2) und einen Hilfsarm (3) umfassen, wobei beide mit einem ihrer Enden mit der festen Struktur verbunden sind, wobei die Arme aufgrund der von den Wellen auf einen mit den Armen (2, 3) verbundenen und gegenüber der festen Struktur (1) liegenden Schwimmer (4) ausgeübten Einwirkung eine Schwenkbewegung ausführen, **dadurch gekennzeichnet, dass** eine senkrechte Schwenkbewegung erhalten wird, da der vom Schwimmer getragene Klapparm (2) länger ist als der Hilfsarm (3) und somit eine stärkere Kraft erzeugt wird, die über eine Klappstruktur (5) auf die feste Struktur (1) übertragen wird, wobei die Klappstruktur mit Hilfe eines Schwinghebelsystem (7) die Höhenunterschiede der genannten Klappstruktur (5) aufgrund der Einwirkung der Gezeiten ausgleicht; diese Klappstruktur (5) hat Bewegungsmittel (132, 133) und ist mit Treibstangen (8) verbunden, die die Pumpenzylinder (6) antreiben, Teleskoparmen (13), die einen Auflagepunkt für die Schwinghebel (7) bilden, Hydraulikzylinder (14), um die Neigung der Teleskoparme (13) und den Auflagepunkt der Schwinghebel (7) auf diesen zu ändern, und einen Hydraulikkreislauf, der auf die Teleskoparme (13) und auf die Hydraulikzylinder (14) einwirkt, um deren Position nach dem Hub der Kolben (61) der Pumpenzylinder (6) einzustellen.

2. Pumpensystem nach Anspruch 1, **dadurch gekennzeichnet, dass** die Klapparme (2) und die Hilfsarme (3) mit einem ihren Ende jeweils über Drehachsen (21 und 31), die frei über das Meer auskragend angeordnet sind, an der festen Struktur (1) befestigt sind.

3. Pumpensystem nach den vorhergehenden Ansprüchen, **dadurch gekennzeichnet, dass** die Schwimmer (4) am unteren Ende einer drehbar über die entsprechenden Drehachsen (42 und 43) an den Klapparmen (2) und den Hilfsarmen (3) befestigten Struktur (41) montiert sind, wobei die genannten Arme das senkrechte Verfahren des Schwimmers (4) durch Einwirkung der Wellen sichern.

4. Pumpensystem nach den vorhergehenden Ansprüchen, **dadurch gekennzeichnet, dass** die Zwischenelemente für die Übertragung der Bewegung der Klapparme (2) auf die Klappstrukturen (5) aus Treibstangen (9) bestehen, die an einem mittleren Bereich der Klapparme (2) und an einem vorderen Ende der genannten Klappstrukturen (5) angelenkt sind.

5. Pumpensystem nach den vorhergehenden Ansprüchen, **dadurch gekennzeichnet, dass** die Klappstrukturen (5) mit ihrem hinteren Ende und mit den entsprechenden Drehachsen (51) an der festen Struktur (1) montiert sind.

6. Pumpensystem nach den vorhergehenden Ansprüchen, **dadurch gekennzeichnet, dass** die Klappstrukturen (5) über der festen Struktur (1) positioniert sind, und ihr vorderes Ende in Bezug auf die genannte feste Struktur (1) in Richtung Meer vorsteht.

7. Pumpensystem nach den vorhergehenden Ansprüchen, **dadurch gekennzeichnet, dass** die Schwinghebel (7) und die Klappstrukturen (5) an ihren mittleren Bereichen über Drehachsen (71) verbunden sind.

8. Pumpensystem nach den vorhergehenden Ansprüchen, **dadurch gekennzeichnet, dass** die Mittel zur Sicherung des geradlinigen Verfahrens der Kolben (61) der Pumpenzylinder (6) aus Schlitten (10) bestehen, die parallel zu den genannten Zylindern (6) angeordnet sind und in Längsrichtung verfahrbar auf zu diesem Zweck an der beweglichen Struktur (1) vorgesehenen Führungen (11) montiert sind.

9. Pumpensystem nach den vorhergehenden Ansprüchen, **dadurch gekennzeichnet, dass** die Kolben (61) mit einem einstückig mit den Schlitten (10) verbundenen Querträger (12) verbunden sind.

10. Pumpensystem nach den vorhergehenden Ansprüchen, **dadurch gekennzeichnet, dass** die Treibstangen (8), die die Bewegung der Klappstrukturen (5) auf die Zylinder (6) übertragen, mit ihren Enden über entsprechende Drehachsen (81 und 82) mit dem vorderen Ende der Schwinghebel (7) und mit dem Querträger (12) verbunden sind.

11. Pumpensystem nach den vorhergehenden Ansprüchen, **dadurch gekennzeichnet, dass** die Teleskoparme (13) mit einem ihrer Enden über eine Drehachse (131) an der festen Struktur (1) befestigt sind, wobei diese Drehachse am gegenüberliegenden Ende einen Gleitschuh (132) aufweist, der in Längsrichtung über den hinteren Teil des entsprechenden Schwinghebels (7) verfahrbar montiert ist.

12. Pumpensystem nach den vorhergehenden Ansprüchen, **dadurch gekennzeichnet, dass** die Gleitschuhe (132) über eine Drehachse (133) am hinteren Ende der Teleskoparme (13) montiert sind.

13. Pumpensystem nach den vorhergehenden Ansprüchen, **dadurch gekennzeichnet, dass** das Verfahren der Gleitschuhe (132) auf den Schwinghebeln (7) durch die Einwirkung der Zylinder (14) auf diese Schwinghebel bestimmt wird.

14. Pumpensystem nach den vorhergehenden Ansprüchen, **dadurch gekennzeichnet, dass** der Hydraulikkreislauf einen Ölbehälter (15), einen hydraulischen Verteilerkasten (16), Hubregelpumpen (17), Notpumpen (18) und Durchflussregelpumpen (19) aufweist.

15. Pumpensystem nach den vorhergehenden Ansprüchen, **dadurch gekennzeichnet, dass** die Hubregelpumpen (17) an der festen Struktur (1) befestigt sind und zwar in Bereichen, die ein wenig von den Endpunkten des maximalen Verfahrwegs der Schlitten (10) entfernt liegen.

16. Pumpensystem nach den vorhergehenden Ansprüchen, **dadurch gekennzeichnet, dass** die Notpumpen (18) an der festen Struktur (1) befestigt sind, und zwar in Bereichen, die in der Nähe der Endpunkte des maximalen Verfahrwegs der Schlitten (10) liegen.

## Revendications

1. Système de pompage actionné par la houle marine du type de ceux comprenant une structure fixe (1) située sur la terre ferme, un bras rabattable (2) et un bras auxiliaire (3), les deux étant unis par une de leurs extrémités à la structure fixe, les bras oscillant sur cette structure fixe (1) à cause de l'action exercée par les vagues sur un flotteur (4) uni aux bras (2, 3) et opposé à la structure fixe (1), **caractérisé en ce que** l'on obtient un mouvement vertical basculant, étant donné que le bras rabattable (2) qui supporte le flotteur est plus long que le bras auxiliaire (3) on obtient une force plus grande qui est transmise à la structure fixe (1) à travers une structure (5) rabattable, qui compense au moyen d'un système de balanciers (7) les différences de hauteur de ladite structure (5) rabattable par l'effet des marées; cette structure (5) rabattable a des moyens de mouvement (132, 133) et elle est connectée à des bielles (8) qui activent les cylindres de pompage (6), des bras télescopiques (13) qui conforment un point de support des balanciers (7), cylindres (14) hydrauliques pour changer l'inclinaison des bras télescopiques (13) et le point de support des balanciers (13) sur ceux-ci, et un circuit hydraulique qui agit sur les bras télescopiques (13) et les cylindres (14) hydrauliques en ajustant leur position selon la course des pistons (61) des cylindres (6) de pompage.

2. Système de pompage selon la revendication 1, **caractérisé en ce que** les bras rabattables (2) et les bras auxiliaires (3) se trouvent fixés par une de leurs extrémités à la structure fixe (1) au moyen des arbres de rotation (21 et 31) disposés en vol à faux sur la mer.

3. Système de pompage selon les revendications antérieures, **caractérisé en ce que** les flotteurs (4) se trouvent montés à l'extrémité inférieure d'une structure (41) fixée, avec possibilité de rotation et au moyen des arbres de rotation (42 et 43) correspondants, aux bras rabattables (2) et aux bras auxiliaires (3), lesdits bras assurant le déplacement vertical du flotteur (4) par l'effet des vagues.

4. Système de pompage selon les revendications antérieures, **caractérisé en ce que** les éléments intermédiaires pour la transmission du mouvement des bras rabattables (2) aux structures rabattables (5) consistent à des bielles (9) articulées sur la zone médiane des bras rabattables (2) et sur l'extrémité antérieure desdites structures rabattables (5).

5. Système de pompage selon les revendications antérieures, **caractérisé en ce que** les structures rabattables (5) se trouvent montées par leur extrémité postérieure et au moyen des arbres de rotation (51) correspondants sur la structure fixe (1).

6. Système de pompage selon les revendications antérieures, **caractérisé en ce que** les structures rabattables (5) se trouvent positionnées par-dessus la structure fixe (1), son extrémité antérieure étant en vol à faux par rapport à ladite structure fixe (1) en direction de la mer.

7. Système de pompage selon les revendications antérieures, **caractérisé en ce que** des balanciers (7) et les structures rabattables (5) se trouvent en rapport par leurs zones médianes au moyen des arbres de rotation (71).

8. Système de pompage selon les revendications antérieures, **caractérisé en ce que** les moyens pour assurer le déplacement vertical des pistons (61) des cylindres de pompage (6) consistent à des chariots (10) disposés parallèlement audits cylindres (6) et montés avec la possibilité de déplacement longitudinale sur des guides (11) définis à cet effet dans la structure mobile (1).

9. Système de pompage selon les revendications antérieures, **caractérisé en ce que** les pistons (61) se trouvent associés à une traverse (12) solidaire des chariots (10).

10. Système de pompage selon les revendications antérieures, **caractérisé en ce que** les bielles (8) qui transmettent le mouvement des structures rabattables (5) aux cylindres (6) se trouvent fixées par leurs extrémités, au moyen des arbres de rotation (81 et 82) correspondants à l'extrémité antérieure des balanciers (7) et à la traverse (12).

11. Système de pompage selon les revendications antérieures, **caractérisé en ce que** les bras télescopiques (13) se trouvent fixés par une de leurs extrémités à la structure fixe (1) au moyen d'un arbre de rotation (131), qui a à l'extrémité opposée un patin (132) monté avec la possibilité de déplacement longitudinal sur la partie postérieure du balancier (7) correspondant.

12. Système de pompage selon les revendications antérieures, **caractérisé en ce que** les patins (132) se trouvent montés sur l'extrémité postérieure des bras télescopiques (13) au moyen d'un arbre de rotation (133).

13. Système de pompage selon les revendications antérieures, **caractérisé en ce que** le déplacement des patins (132) sur les balanciers (7) est déterminé par l'action des cylindres (14) sur ceux-ci.

14. Système de pompage selon les revendications antérieures, **caractérisé en ce que** le circuit hydraulique inclut un réservoir à huile (15), une boîte de distribution hydraulique (16), des pompes de régulation de la course (17), des pompes d'émergence (18) et des pompes de régulation de débit (19).

15. Système de pompage selon les revendications antérieures, **caractérisé en ce que** les pompes de régulation de la course (17) se trouvent fixées à la structure fixe (1) et dans des zones légèrement espacées des points extrêmes de la trajectoire maximale des chariots (10).

16. Système de pompage selon les revendications antérieures, **caractérisé en ce que** les pompes d'émergence (18) se trouvent fixées à la structure fixe, dans des zones proches aux points extrêmes de la trajectoire maximale des chariots (10).
